# EUROPEAN PATENT APPLICATION

(11) **EP 4 508 978 A1**
(43) Date of publication of application: **19.02.2025**
(21) Application number: 24194873.6
(22) Date of filing: 16.08.2024
(51) Int. Cl.: A01K 7/00, A01K 7/02, A01K 39/026

(54) **ANIMAL DRINK DISPENSER APPARATUS AND SYSTEM**

(30) Priority: 17.08.2023 US 202318451357
(71) Applicant: Diedrichsen, Erik Joseph, West Bridgewater, MA 02379 (US)
(72) Inventor: Diedrichsen, Erik Joseph, West Bridgewater, MA 02379 (US)
(74) Representative: Purdylucey Intellectual Property

(57) **Abstract**

A gravity-induced automatic animal drink dispenser apparatus 10 with no moving parts that promotes increased sanitation and minimizes the amount of work required to maintain a supply of liquids to the animals. The animal drink dispenser apparatus comprises a housing 12 defining an interior volume adapted to store a supply of liquids, a bottom tray 14 releasably attachable to a bottom of the housing defining a trough 32, at least one passageway 40, defined by the bottom tray, fluidly communicating the interior volume of the housing with the trough by force of gravity, and a vent apparatus 20 adapted to equalize a pressure in a volume of air above the liquids in the housing, which is reduced when said liquids are dispensed to the trough, with the ambient air.

## Description

### BACKGROUND OF THE INVENTION

### Field of the Invention

The present disclosure relates to animal drink dispensers, and more particularly relates to a completely automated, gravity induced drink dispenser with no moving parts or valves, and which is inexpensive and easy to take apart and reassemble.

### Description of the Prior Art

Animal raising requires provision of a source of water for the animals involved. This is particularly important in the area of raising chickens, birds, or other animals. The water supply should be clean and always readily available to the animals. Preferably, the water should be stored and supplied in a manner which prevents stagnation or contamination. Furthermore, the means for providing such water should be easy to assemble and disassemble, inexpensive and reliable, as well as energy efficient.

It is advantageous to be able to water and/or feed animals without having to do so manually. Many conventional pet feeders and watering devices automatically deliver food and/or water to an animal, and many of these automatic pet feeders and watering devices accomplish this utilizing the force of gravity. For example, U.S. Pat. No. 6,467,428 discloses, as near as can be appreciated, a gravity-fed animal watering device which utilizes a fancifully shaped water bottle and bowl. The water bottle has an external breather tube communicating the bowl with the top of the water bottle. A push-pull cap and filter arrangement are removably disposed in an opening at the bottom of the bottle, requiring the bottle to be separated from the bowl to refill the bottle with water. Not only does the external nature of the breather tube enhance the likelihood that an animal or human will knock the watering device over, but the requirement to remove the bottle from the bowl to refill the bottle will act as a hinderance to refilling the bottle.

Conventional drink dispensers typically include a water storage vessel and a bowl. The vessel stores water above the bowl and includes an opening. The bowl receives and supports the vessel such that the stored water or food passes through the opening, under the force of gravity, and into the bowl. The bowl presents the food or water such that it is accessible by an animal. As the animal consumes the water from the bowl, gravity forces more water through the opening and into the bowl. As food, water, and saliva from the animal inevitably get into the bowl, bacteria develop in the bowl such that regular cleaning of the bowl is required to maintain a proper level of sanitation for the animal.

Virtually all prior attempts to provide a gravity-fed animal drink dispenser known to the inventor employ a one-way or check valve to inhibit the flow of water under certain circumstances and permit flow of water in other circumstances. Such mechanical devices, having moving parts, of necessity get clogged by debris, calcification forming on the movable parts, or other matter which is inevitably introduced into the apparatus. Therefore, what is needed is a gravity-fed animal drink dispenser that does not have any moving parts, but which permits a regulated, balanced flow of water into a watering trough while allowing for refilling without disassembly.

### SUMMARY OF THE INVENTION

In accordance with the various embodiments of the present invention, and to address the aforementioned problems, there is provided a gravity-induced automatic animal drink dispenser device that promotes increased sanitation and minimizes the amount of work required to provide a supply of fresh drinking water to animals, without any moving parts, as defined in the appended claims.

More specifically, an apparatus for storing and supplying a regulated amount of liquids, such as drinking water, is provided. The apparatus in its most general description comprises: a housing defining an interior volume adapted to store a supply of liquids, a bottom tray releasably attachable to a bottom of the housing, the bottom tray member having a drinking trough associated therewith. The bottom tray defines a wall which fluidly separates the supply of drinking water in the interior volume from the trough. At least one passageway is defined in the wall for fluidly communicating the liquids in the interior volume with the trough. A vent apparatus disposed within the interior volume fluidly communicates a volume of air above the liquids in the housing, which is reduced when said liquids are dispensed, with the ambient air to equalize pressure therebetween. Animals may consume liquids from the trough of the animal drink dispenser apparatus whereby the housing is caused to further dispense said liquids into said trough.

The vent apparatus may include a one-way valve that allows ambient air to enter and equalize pressure in the volume of air above the liquids therewith when the pressure inside said volume of air falls below a predetermined threshold. Alternatively, the vent apparatus may include a vent tube having an open upper end disposed inside the volume of air inside the housing, and an open lower end on the wall or in proximity to the trough. The lower end of the vent tube is reversibly submerged into the liquids flowing through the passageway to the trough such that said vent tube fluidly communicates the ambient air to the volume of air in the housing to equalize pressure therebetween when the liquids in the trough is consumed whereby the liquid levels in the trough drop and cause the open lower end to reemerge from said liquid. In some embodiments, the lower end is adjustably positioned at a desired distance from the bottom of the trough to maintain a desired volume of the liquids dispensed to said trough. By equalizing pressure in the volume of air in the housing, gravity induces the housing to resume dispensing liquids into the trough without impedance of negative pressure in the volume of air. Correspondingly, the vent apparatus allows the volume of air in the housing to be pushed out therethrough to the ambient air when said housing is being refilled by the liquid inlet such that the volume of air is prevented from pressurizing.

At least one passageway defined on the wall of the bottom tray for fluidly communicating the liquids in the interior volume with the trough. In some embodiments, a single passageway is defined on the bottom tray. In other embodiments, more than one passageway is defined on the bottom tray.

In an alternative embodiment, an animal drink dispenser apparatus may comprise a housing defining an interior volume adapted to store a supply of liquids, a bottom tray releasably attachable to a bottom of the housing defining a trough, and a passageway, defined by the bottom tray, fluidly communicating the interior volume of the housing with the trough by force of gravity. The passageway may be defined in proximity to an end of the trough. A vent apparatus may be adapted to equalize a pressure in a volume of air above the liquid in the housing, which is reduced when said liquid is dispensed to the trough, with the ambient air.

In another alternative embodiment, an animal drink dispenser apparatus comprises: a housing defining an interior volume adapted to store a supply of liquids, a bottom tray releasably attachable to a bottom of the housing defining a trough, wherein at least one portion of the trough has a concaving contour, and one or more passageways, defined by the bottom tray, fluidly communicating the interior volume of the housing with the trough by force of gravity. At least one of the passageways may be defined in proximity to the at least one portion such that obstructions are prevented from blocking said passageways. A vent apparatus adapted to equalize a pressure in a volume of air above the liquids in the housing, which is reduced when said liquids are dispensed to the trough, communicates the volume of air above the liquids with the ambient. The vent apparatus may be seated on the passageway in proximity to the at least one portion such that the vent apparatus fluidly communicates the ambient air into the volume of air based on a level of the liquid in the at least one portion of the trough.

### BRIEF DESCRIPTION OF THE DRAWINGS

The above-mentioned features of the disclosure will become more clearly understood from the following detailed description of the disclosure read together with the drawings in which:
FIGs. 1A-1C depict left front perspective exploded view of a first embodiment of an animal drink dispenser embodying the teachings of the present disclosure.
FIG. 2 is a bottom left perspective view of a bottom tray thereof.
FIG. 3 is a front elevational view thereof.
FIG. 4 is a rear elevational view thereof.
FIG. 5 is a right-side elevational view thereof.
FIG. 6 is a left-side elevational view thereof.
FIG. 7 is a top view thereof.
FIG. 8 is bottom view thereof.
FIG. 9 is an assembled rear elevational view of the first embodiment of the drink dispenser.
FIG. 10 is a cross-sectional elevational view thereof taken along lines 10-10 of FIG. 9.
FIGs. 11A-11C depict left front perspective exploded view of a second embodiment of an animal drink dispenser embodying the teachings of the present disclosure.
FIG. 12 is a bottom left perspective view of a bottom tray thereof.
FIG. 13 is a front elevational view thereof.
FIG. 14 is a rear elevational view thereof.
FIG. 15 is a right-side elevational view thereof.
FIG. 16 is a left-side elevational view thereof.
FIG. 17 is a top view thereof.
FIG. 18 is bottom view thereof.
FIG. 19 is an assembled rear elevational view of the first embodiment of the drink dispenser.
FIG. 20 is a cross-sectional elevational view thereof taken along lines 20-20 of FIG. 19.
FIGs. 21A-21C depict left front perspective exploded view of a third embodiment of an animal drink dispenser embodying the teachings of the present disclosure.
FIG. 22 is a bottom left perspective view of a bottom tray thereof.
FIG. 23 is a front elevational view thereof.
FIG. 24 is a rear elevational view thereof.
FIG. 25 is a right-side elevational view thereof.
FIG. 26 is a left-side elevational view thereof.
FIG. 27 is a top view thereof.
FIG. 28 is bottom view thereof.
FIG. 29 is an assembled rear elevational view of the first embodiment of the drink dispenser.
FIG. 30 is a cross-sectional elevational view thereof taken along lines 30-30 of FIG. 29.

### DETAILED DESCRIPTION OF EMBODIMENTS

The following description is of a preferred and other embodiments presently contemplated for carrying out the disclosure. This description is not to be taken in a limiting sense, but is made merely for the purpose of describing one or more embodiments of the disclosure. The scope of the disclosure should be determined with reference to the accompanying claims.

As used herein, "substantially" means largely or considerably, but not necessarily wholly, that is sufficient to work for the intended purpose. The term "substantially" thus allows for minor, insignificant variations from an absolute or perfect state, dimension, measurement, result, or the like as would be expected by a person of ordinary skill in the art, but that do not appreciably affect overall performance.

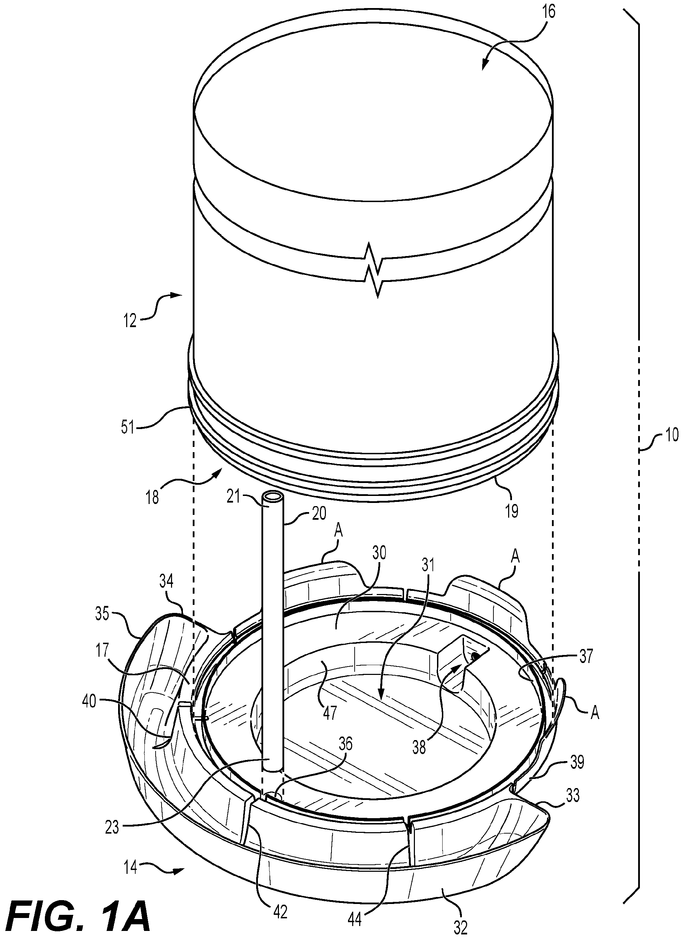

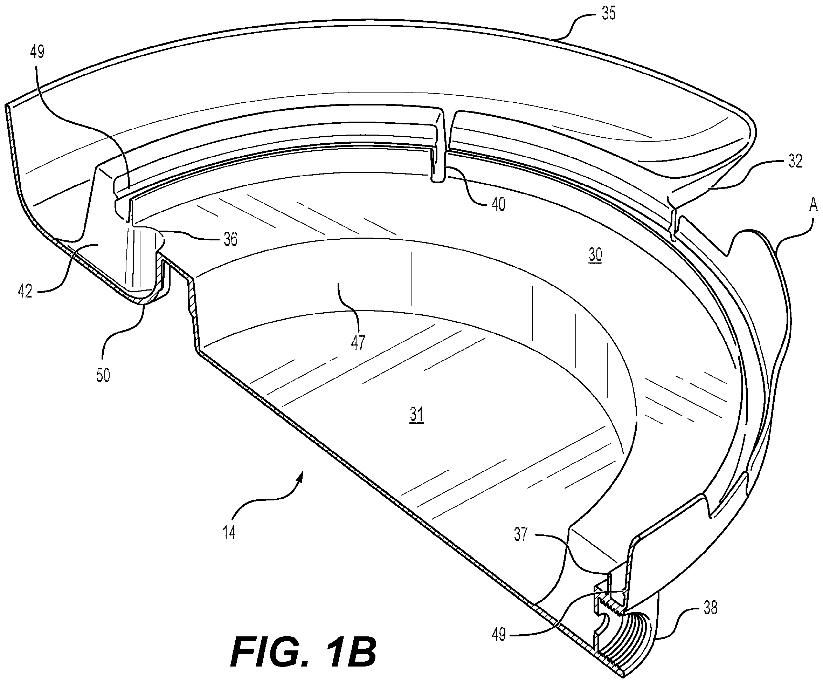

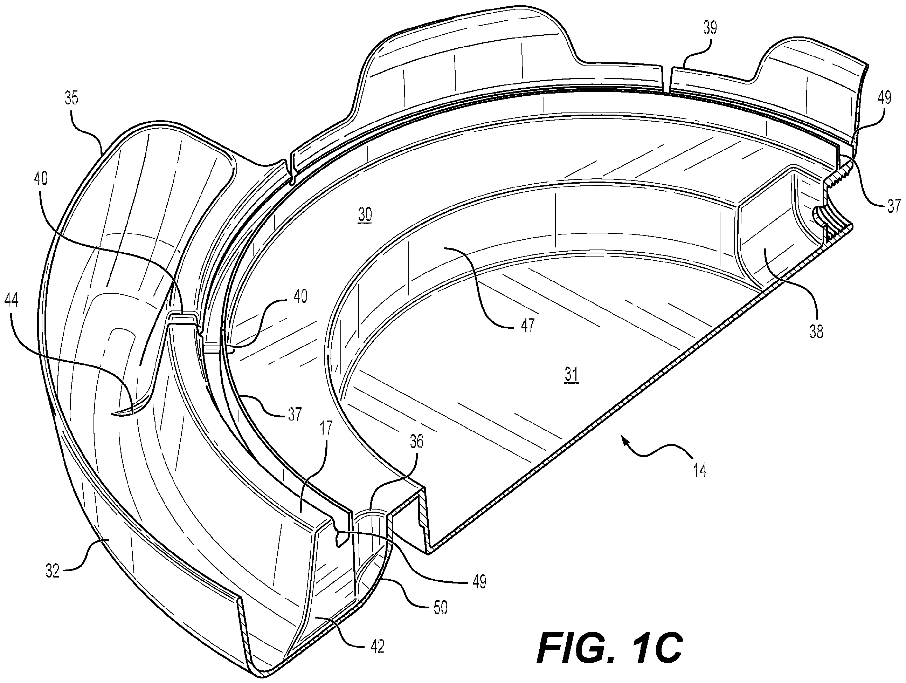

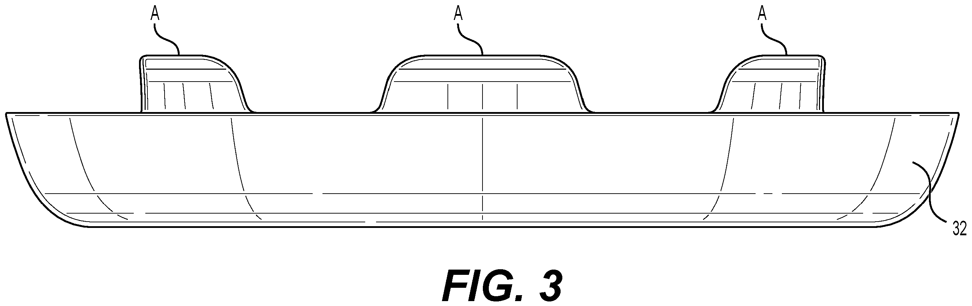

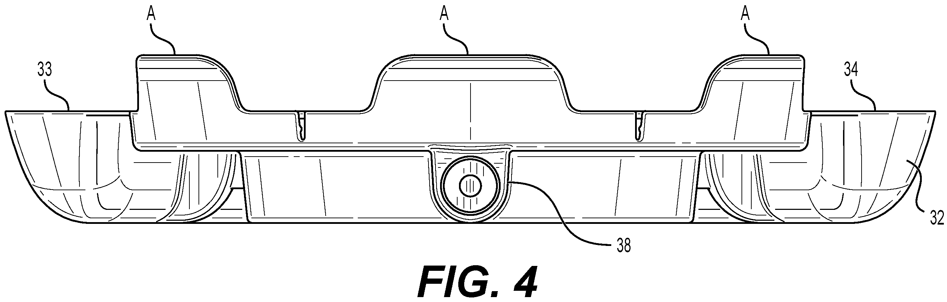

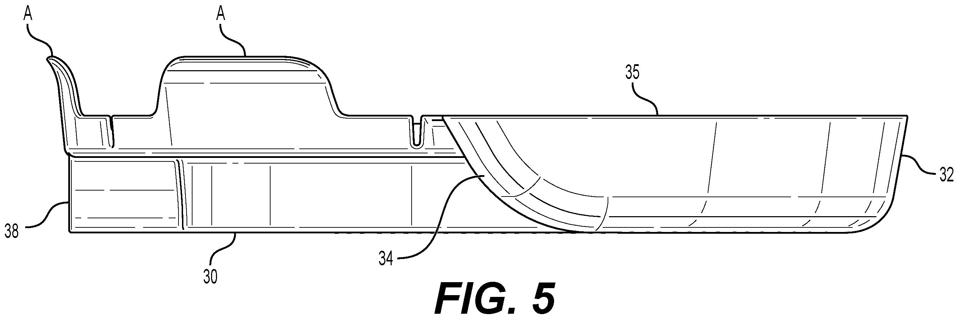

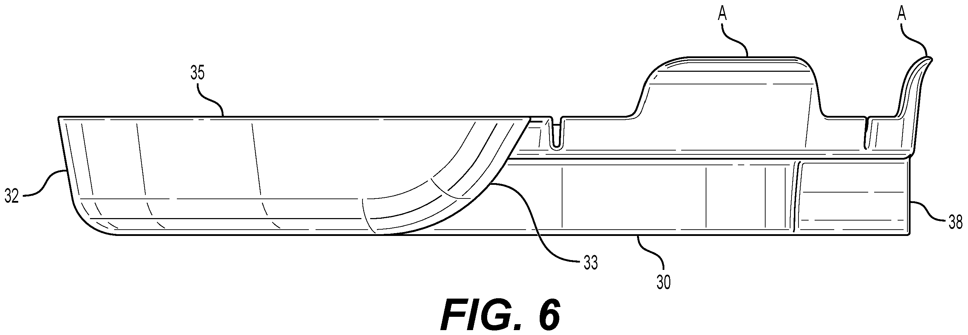

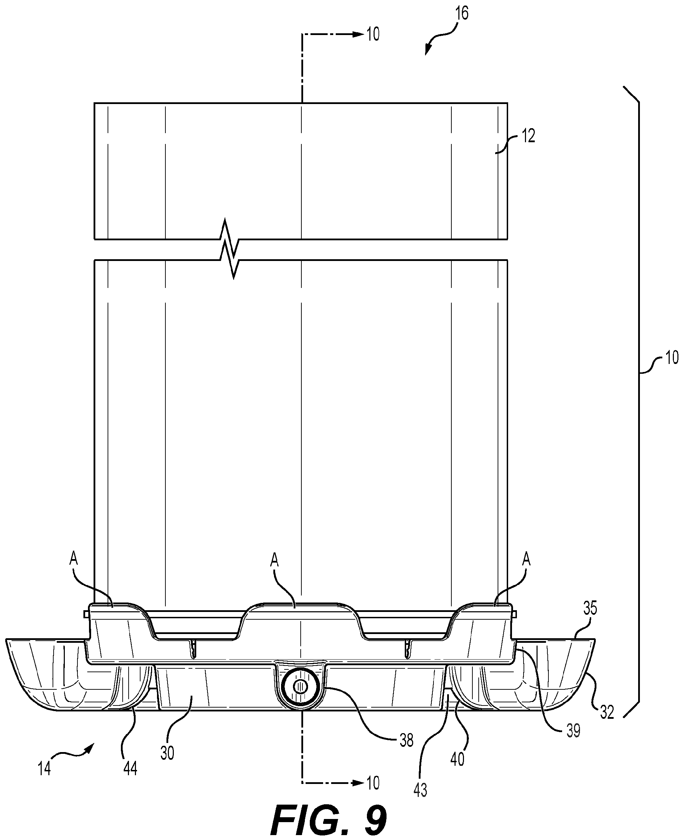

An apparatus for storing and supplying a regulated amount of liquids is provided. In certain embodiments, for example the embodiment shown in FIGs. 1-10, a drink dispenser apparatus 10 comprises: a housing 12 defining a hollow interior volume adapted to store a supply of liquids, and a bottom tray 14 releasably attachable to a bottom, such as a bottom edge 19, of the housing 12, the bottom tray 14 defining a trough 32. At least one passageway is defined on the bottom tray 14 for fluidly communicating the liquids in the interior volume of the housing 12 with the trough 32. In some embodiments, it is contemplated that only a single passageway, such as passageway 42, be employed. In other embodiments, the bottom tray 14 may have more than one passageway, such as passageways 40, 42, and/or 44. A vent apparatus, such as one or more vent tubes 20, fluidly communicate a volume of air V above a liquid supply W stored in the interior volume of the housing 12. The vent apparatus equalizes the pressure in the volume of air V, which is reduced when said liquids are dispensed to the trough 32, with the ambient air. In the embodiment shown, a single vent tube 20 is associated with one of the passageways; however, additional vent tubes may be employed associated with other passageways 40, 42, and/or 44.

In some embodiments, the bottom tray 14 may be indicative of a snap-fitting tray similar to that used in connection with a standard 5-gallon bucket adapted to be removably connected to an upper edge of the housing 12, and the trough 32 associated with the bottom tray 14 may be adapted to hold an exposed supply of liquids for animals to drink. Liquids supplied by the apparatus 10 may include, but not be limited to, drinking water, juices, milk, liquidized fodder, nutritional supplements, medicines, and the like.

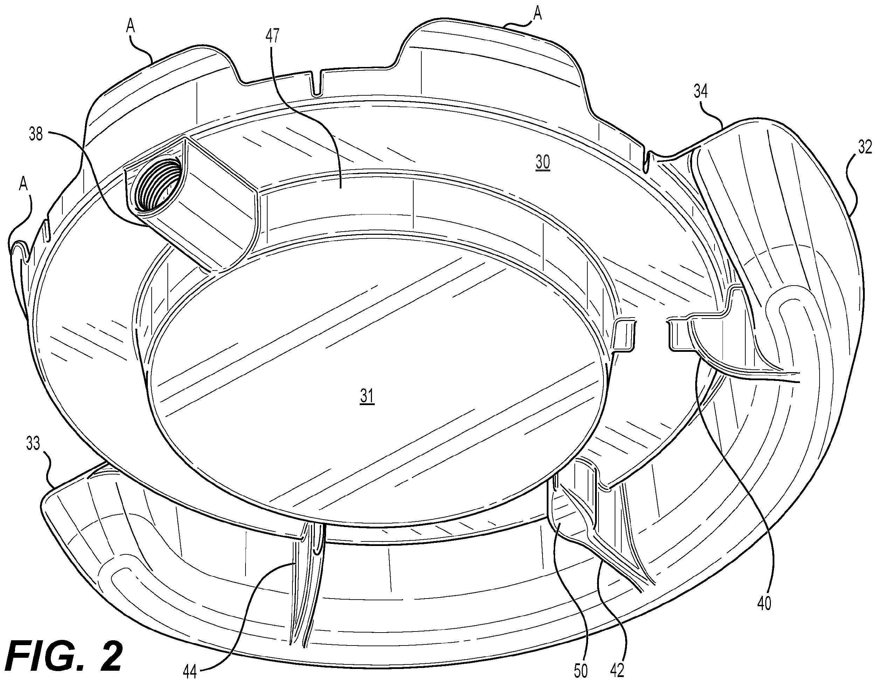

The bottom tray 14 defines opposed, concentric inner and outer ridges 37 and 39, respectively, adapted to mate with a corresponding bottom edge 19 defining an open bottom of housing 12. The bottom tray 14 may be secured to the housing 12 by fitting the bottom edge 19 between the inner ridge 37 and the outer ridge 39. The ridges 37, 39 may be defined along a perimeter of a support surface 30 on the bottom tray 14. The support surface 30 is adapted to support the liquids stored in the interior volume of the housing 12. In some embodiments, the support surface 30 may have a substantially circular contour, and the ridges 37, 39 may be configured along the circumference of said support surface 30, as shown in FIGs. 1A and 2. Contours and dimensions of the ridges 37, 39 may be suitably adapted based on shape and dimensions of the housing 12, base 14 and the support surface 30. One or more passageways 40, 42, or 44 may be defined by wall 17 to allow water to be dispensed therethrough. The wall 17 is adapted to prevent liquids from flowing into the trough 32, except through any of the one or more passageways 40, 42, or 44.

The housing 12 may comprise any suitable receptacle for holding a supply of liquids. In some embodiments, the housing 12 may be configured similarly to a 5-gallon bucket, and relevant portions of the bottom tray 14 configured similarly to a removable lid to a 5-gallon bucket. In some embodiments, the housing 12 may have a substantially cylindrical profile. In other embodiments, the housing 12 may have a cuboidal profile. The housing 12 may be suitably adapted to have any contours or dimensions. Contours of the bottom tray 14 may correspond to the contours of the housing 12. In some embodiments, the contours of the bottom tray 14 may correspond to the contours of the bottom edge 19 of the housing 12. It is to be understood that the bottom tray 14 is intended to be substantially sealed to the housing 12 to retain the supply of liquids within the interior volume thereof, to prevent the liquid from leaking from between said bottom tray 14 and the housing 12.

The bottom tray 14 may be removably connectable to the bottom of the housing 12, or may be permanently attached thereto. In embodiments where the bottom tray 14 is permanently attached to the housing 12, the bottom tray 14 and the housing 12 may be manufactured as a single piece, or may be permanently connected thereto by means of adhesive, welding or otherwise bonding the bottom tray 14 to the housing 12. In embodiments where the bottom tray 14 is removably connectable to the bottom of the housing 12, the bottom tray 14 may be connected to the housing 12 by means of including, but not limited to, screws, nails, rivets, hook and loop fasteners, hook and slot fasteners, interlocking structures engageably configured therebetween, magnetic elements, and the like. In some embodiments, structure for removably (or permanently, if desired) connecting the bottom tray 14 with the bottom edge 19 of the housing 12 may be preferred. Lower end wall 18 of housing 12 indicative of area within the bottom edge 19 may be correspondingly contoured to allow connection with the bottom tray 14. In some embodiments, one or more resilient tabs "A" extending from the outer ridge 39 of the bottom tray 14 may permit the partial release of the interlocking engagement of lip 49 defined by wall 39 and lip 51 that extends from the bottom end 19 of the housing 12, as shown in FIGs 1-5.

In some embodiments, the trough 32 may have a substantially annular contour, where said trough 32 is configured along a perimeter of wall 17 of bottom tray 14. In some embodiments, the trough 32 may be defined with a substantially U-shaped cross-sectional contour for receiving liquid from the housing 12, and allowing one or more animals to drink liquid therefrom. The trough 32 may be configured fully or partially along the perimeter of the bottom tray 14. In embodiments shown in FIGs. 2, 7, and 8, the trough 32 is defined half-way around the perimeter of bottom tray 14. In other embodiments, the contours and dimensions of the trough 32 may be suitably adapted based on factors including, but not limited to, body structure, drinking requirements, and the like, of the animals for which the apparatus 10 is intended. In some embodiments, a trough edge 35 is defined on the trough 32 to prevent liquids dispensed into the trough 32 from overflowing. In some embodiments, the trough overflow edge 35 may have a substantially curved contour so as to prevent injuries to animals from contact with otherwise blunt or sharp edges. The trough 32 defines a first end 33 and a second end 34 that, along with the trough edge 35, prevent liquids from spilling out of said trough 32.

The bottom tray 14 defines at least one liquid inlet 38 adapted to fluidly communicate at least one liquid supply source with the housing 12. The liquid inlet 38 may be adapted to introduce liquids into the housing 12. The liquid inlet 38 may be associated with a water supply source such as a municipal water supply to maintain a supply of fresh water in the housing 12. The liquid inlet 38 may be internally threaded to securely engage with the at least one liquid supply source, such as a hose or a tap, having a corresponding threaded portion. In some embodiments, the liquid inlet 38 may be provided on the bottom tray 14, as shown in embodiment of FIGs. 1-10. In such embodiment, the liquids from the at least one supply may be pressurized to force said liquids into the housing 12 such that the liquid moves unidirectionally into said housing 12 against the pressure of the liquid present in the interior volume when the liquid inlet 38 is opened. The liquid inlet 38 may be reversibly sealed once the interior volume is filled with the liquid. In other embodiments, the liquid inlet 38 may be defined at or near an upper end wall 16 of the housing 12. In yet other embodiments, the liquid inlet 38 may be defined on the lateral surface of the housing 12. Alternatively, the housing 12 may be periodically filled with liquid manually. In such embodiments, the upper end wall 16, or a portion or releasable fill cap thereof, may be removably configured to the housing 12 to allow for manual refilling. Bottom tray 14 may define a lower volume or area 31 adapted to provide the necessary vertical height for liquid inlet 38. A wall 47 may be employed to define the lower volume or area 31.

Additionally, the housing 12 or bottom tray 14 may be interconnected with one or more other housing(s) 12 or bottom tray(s) 14 to create a multi-faceted drink dispenser system. In some embodiments, each of the one or more housings 12 may be integrally stacked over the other, thereby increasing the interior volume available for holding liquids therein. Other arrangements and configurations of the embodiments disclosed herein are considered to be within the scope of the disclosure.

It is to be appreciated that the interconnection of the housing 12 with the bottom tray 14 may be used to provide structure to fluidly communicate the interior of the housing 12, and, thus, the supply of liquids, to the trough 32. To that end, the bottom tray 14 may be configured to provide one or more passageways 40, 42, and 44, as discussed herein. The passageways 40, 42, and/or 44 are preferably sized and shaped to permit the desired amount and flow rate of liquid from the housing 12 into the trough 32, and to co-act with the vent apparatus (described below) to prevent liquids from overflowing the trough 32. Each of the at least one passageways may be defined to be from about 1/16" to about 2" in width, and from about 1" to about 4" in depth. It has been found by experimentation, in certain embodiments, that passageways 40, 42, and/or 44 having a width "W" of between 1/8" - ¼" and depth "D" of 1 ¼" - 1 ½" work suitably.

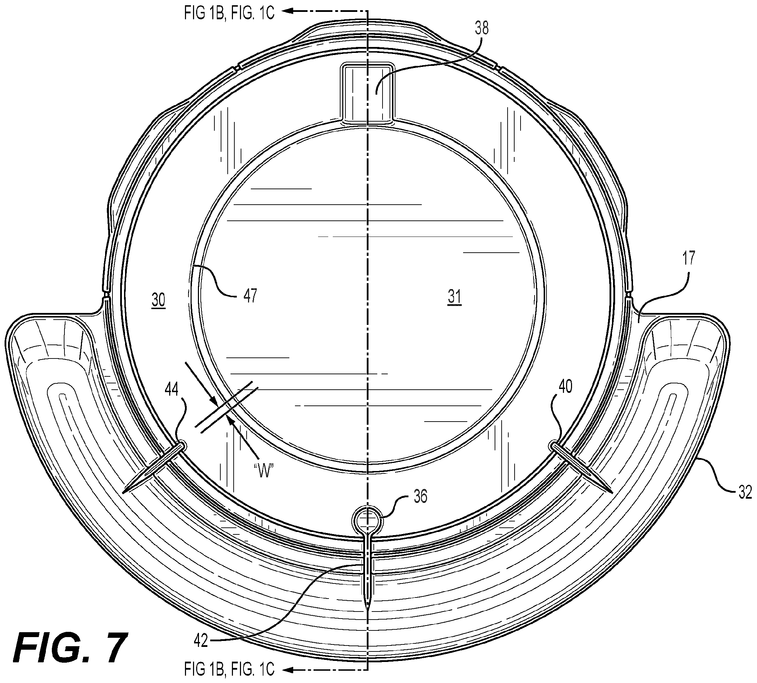

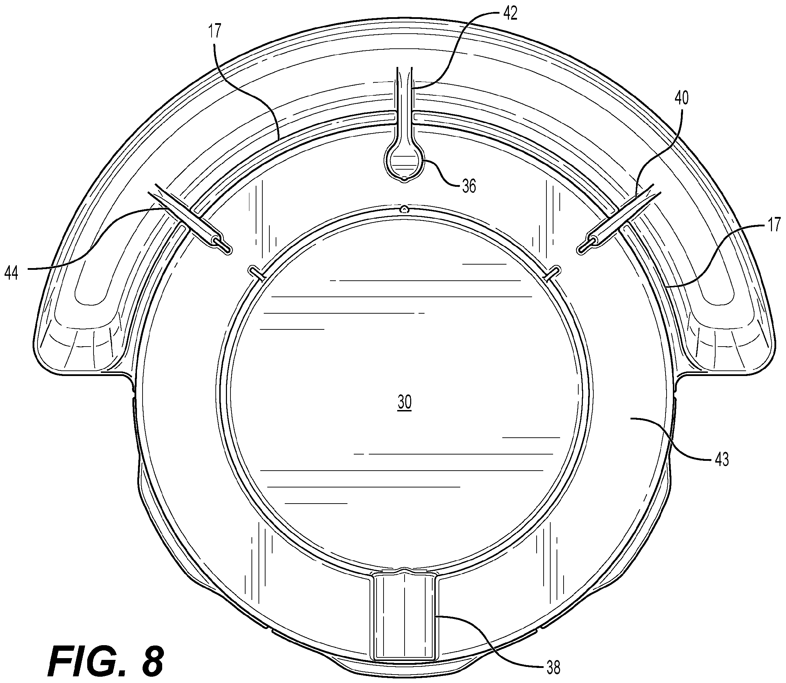

It is also to be appreciated that dam-like structure, such as wall 17 as shown in FIGs. 1A and 8, may be used to connect the bottom tray 14 to the trough 32. The wall 17 may accommodate one or more passageways, such as channels or passageways 40, 42, and 44. The wall 17 substantially prevents the water over the support surface 30 to flow into the trough 32, except through the one or more passageways such as passageways 40, 42, or 44. The wall 17 may have a substantially annular contour. The wall 17 may also separate the support surface 30 from a bottom surface of the trough 32. FIGs. 1B and 1C provide cross-sectional illustrations of the bottom tray 14 along the indicated lines of FIG. 7. In embodiments shown in FIGs. 1B, 1C, and 8, the wall 17 may have a substantially hollow construction, said hollow construction being characterized by a substantially annular void 43.

It is desirable to equalize the pressure in a volume of air V above the surface of liquids W in the housing 12 to allow for the free or otherwise desired flow of liquids from the interior volume of the housing 12 to the trough 32. Because the volume of air V defined by the upper end wall 16 of the housing 12 and the surface of the liquids (referred to herein as the "chamber") is sealed, dispensing liquids into the trough 32 may create a reduction in the pressure in the chamber, which in turn may tend to impede further dispensation of liquids into the trough 32 through the passageways 40, 42, and/or 44. The housing 12 is induced to dispense liquids through the passageways 40, 42, and/or 44 defined on the bottom tray 14 into the trough 32 by force of gravity. In some embodiments, consumption of liquids from the trough 32 may cause the liquid level to drop in said trough 32. The one or more passageways 40, 42 and/or 44 may then allow liquids to be dispensed from the housing 12 into the trough 32 to replace the consumed fluids. The more liquid that drains from the housing 12 into the trough 32, the stronger the negative pressure within the chamber will be. The stronger the negative pressure within the chamber, the greater the impedance to the liquids in the housing 12 from exiting into the trough 32. Eventually, because the liquids are acted upon by gravity to exit the housing 12 and enter the trough 32, an equilibrium may be reached between the gravitational effect on the liquids in the housing 12 and the effect of the negative pressure within the chamber, thereby preventing said liquids from leaving the housing 12 and entering the trough 32.

To address this problem, a vent apparatus is interposed. One embodiment of a vent apparatus suitable for use is a flapper or one-way valve (not shown) positioned on or near housing end 16. Said flapper or one-way valve fluidly communicates the chamber with the ambient air outside of the chamber. The valve may be configured to controllably communicate the ambient air into the housing 12 when the pressure in the chamber falls below a predetermined threshold. The valve may be any one or combination of including, but not limited to, check-valves, ball check valves, diaphragm check valve, flapper valve, stop-check valves, lift-check valves, flow check valve, duckbill valves, and the like. The valves may be of such specification that said valve is actuated to fluidly communicate the ambient air with the chamber when pressure therein fall below the predetermined threshold.

Alternatively, in other embodiments, to equalize the pressure in the chamber with the ambient, the housing 12 includes one or more vent tube 20 that fluidly communicate the ambient air with the chamber. Each vent tube 20 has an open upper end 21 disposed within the chamber and an open lower end 23 disposed in or near one or more of the passageways 40, 42 and/or 44 of tray 14. In some embodiments, the vent tube 20 may have a hollow structure separate from the housing 12. In other embodiments, the vent tube 20 may be a hollow slit integrally defined on an inner surface of the housing 12 that connects the trough 32 and the chamber.

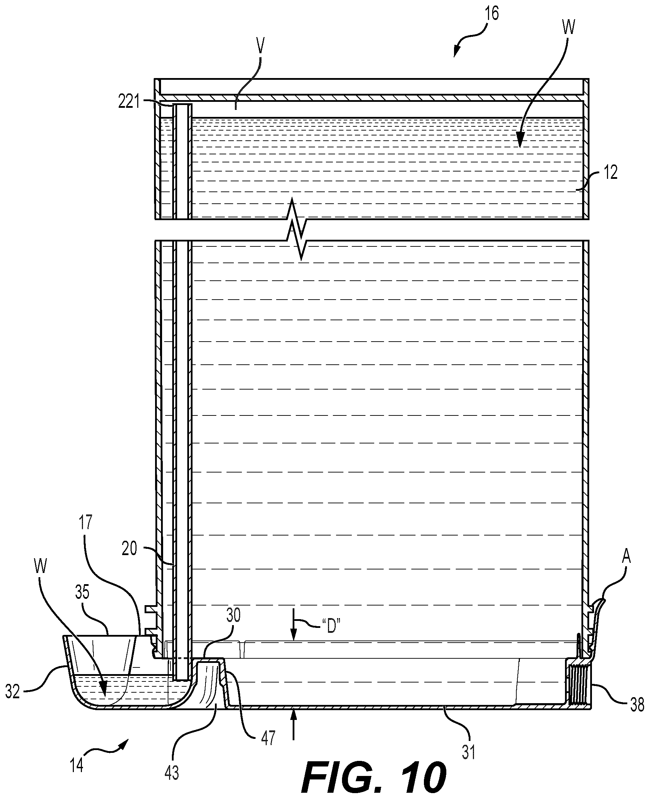

In some embodiments, a socket 36 is defined by one or more of the passageways 40, 42, and/or 44 to receive and hold said vent tube 20, as shown in FIGs. 1A, 1C, 7 and 8. The socket 36 may have a contour corresponding in shape to the cross-sectional shape of the vent tube 20. The passageway 42 having the socket 36 may have a contour similar to a key-hole, as shown by a portion 50 in FIG. 2 and the socket 36 in FIG. 8. The lower end 23 of the vent tube 20 is adapted to seat within the socket 36, to permit fluid communication between the chamber and passageway 40, 42, and/or 44. In some embodiments, the lower end 23 may be submerged in the liquid in the passageway 42, as shown in FIG. 10. As the liquid in the trough 32 is consumed, the level of the liquid in the socket 36 and the corresponding passageway may reduce such that the lower end 23 becomes exposed to the ambient air. The ambient air may then enter the chamber via the vent tube 20, and equalize the pressure of the volume of air V in the chamber with that of the ambient air, permitting additional liquid to pass from housing 12 into trough 32. In some embodiments, the pressure of the ambient air may correspond to atmospheric pressure associated with the geographical location in which the apparatus 10 is placed.

Positioning the vent tube 20 at a plurality of heights with respect to the trough 32 may allow for maintaining a plurality of volumes of liquid in the trough 32. To illustrate, positioning the lower end 23 close to a bottom of the trough 32 may cause said trough 32 to hold lesser volume of liquid compared to when the lower end 23 is positioned away from said bottom of the trough 32. The lower end 23 may be adjustably positioned at a desired distance from the bottom of the trough 32 to maintain a desired volume of the liquid dispensed to said trough 32, based on requirements. With the pressure in the chamber being equalized with the ambient air, the housing 12 may allow liquids to flow through the passageway to the trough 32, until the lower end 23 again submerges into the liquid dispensed to said trough 32 and negative pressure is created in the chamber. In this way, the ambient air outside of the trough 32 is fluidly communicated with air in the chamber, to maintain an equilibrium in which a level of liquid in the trough 32 may tend to not overflow the edge 35 of the trough 32.

Correspondingly, the vent tube 20 may also allow the housing 12 to be refilled without pressurizing the chamber. When the housing 12 is refilled with liquids via the liquid inlet 38, the volume of air in the chamber is pushed out via the vent tube 20 to the ambient, thereby preventing a positive pressure from being accumulated within the chamber. On pushing the air out, an equilibrium may be reached between the ambient air and the pressure within the chamber. In other embodiments, the upper end wall 16, or a portion thereof, may be removed to place liquid into the interior volume of the housing 12.

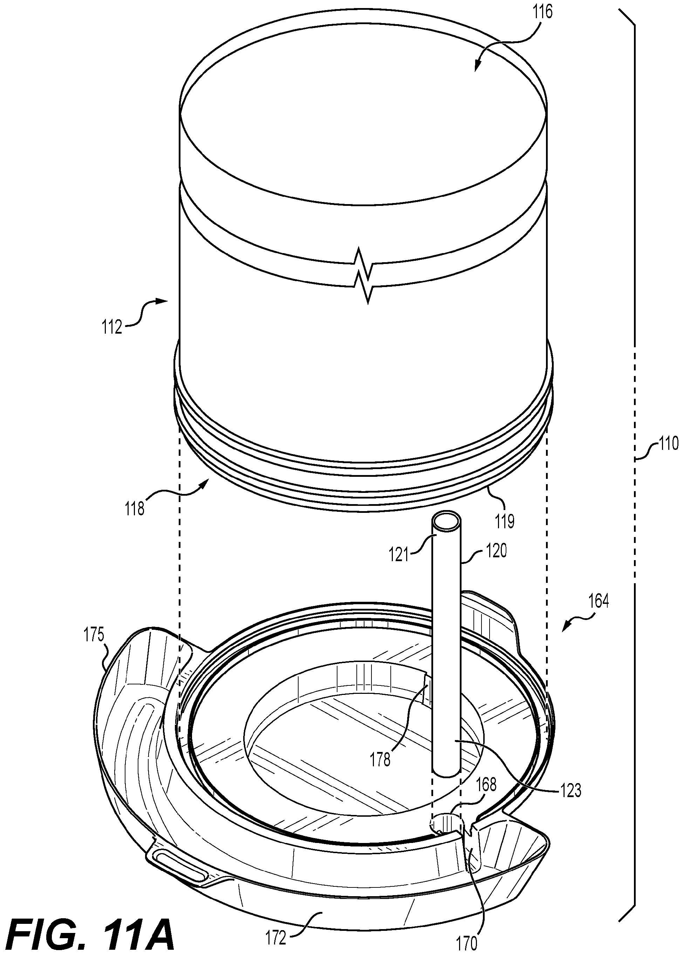

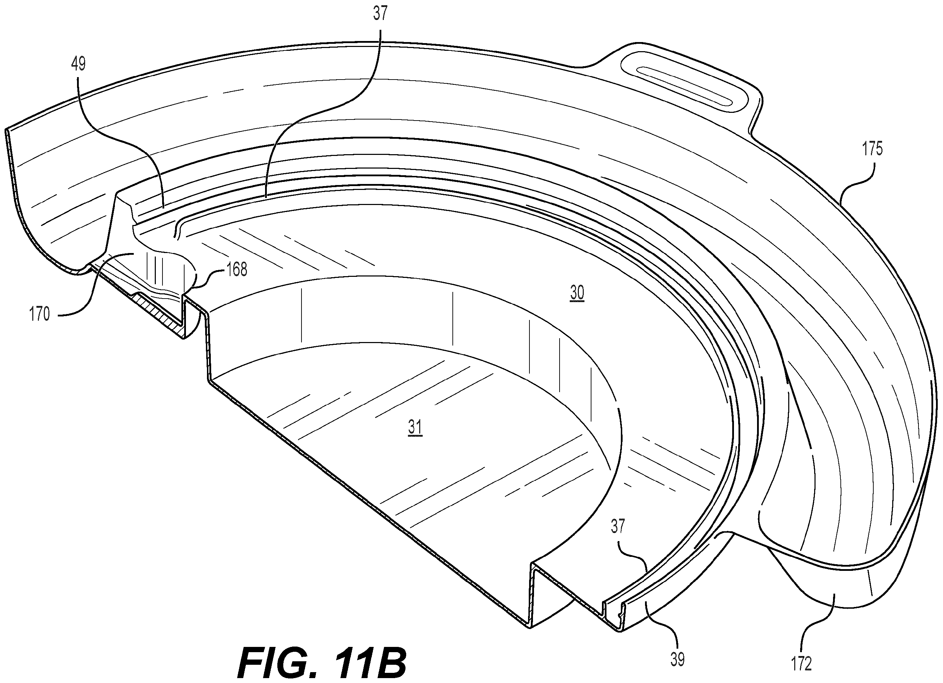

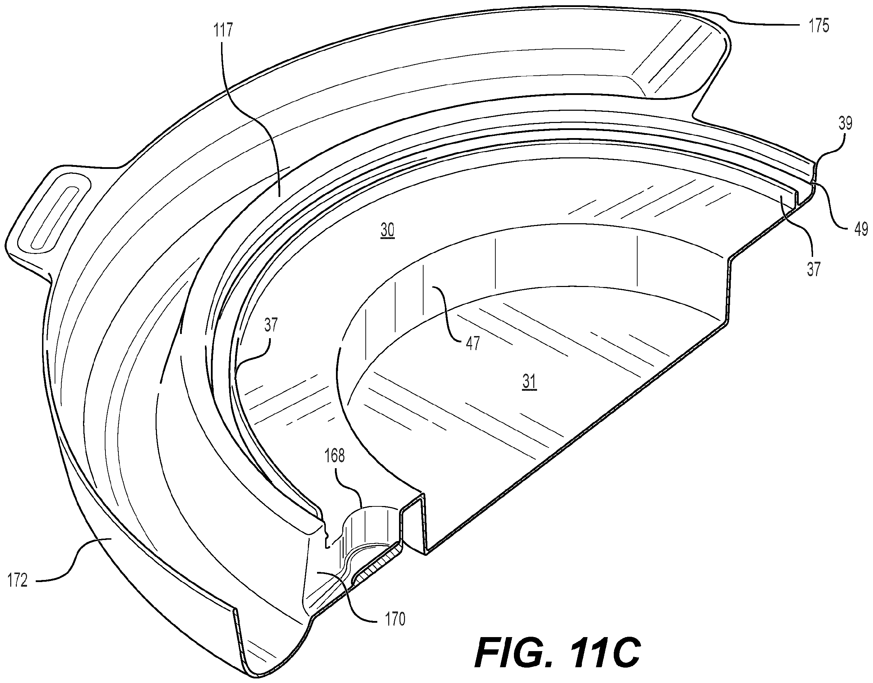

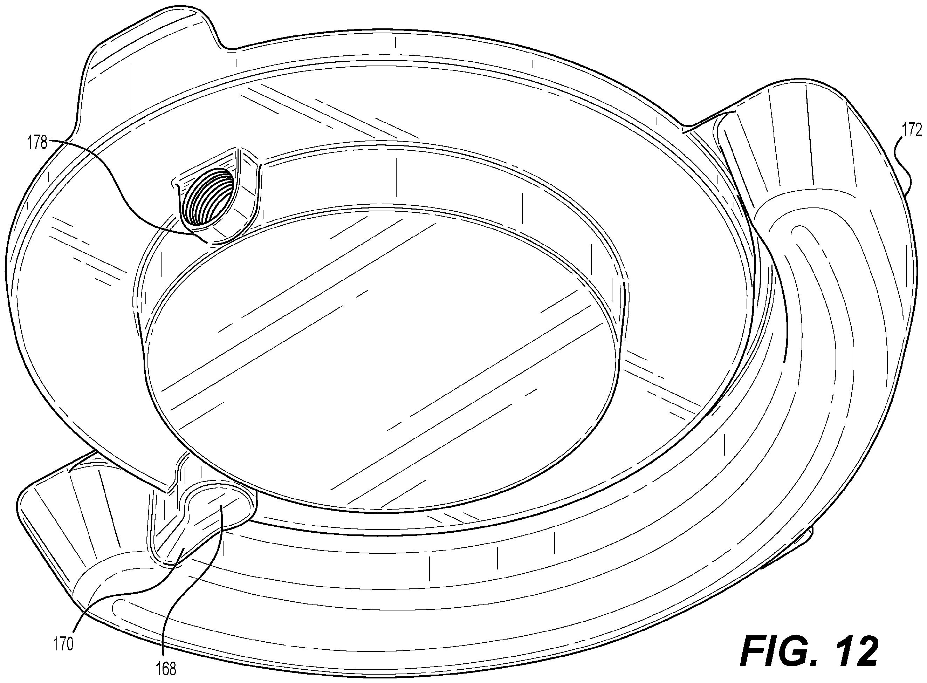

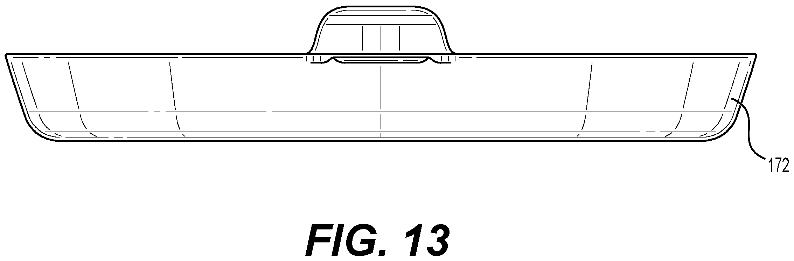

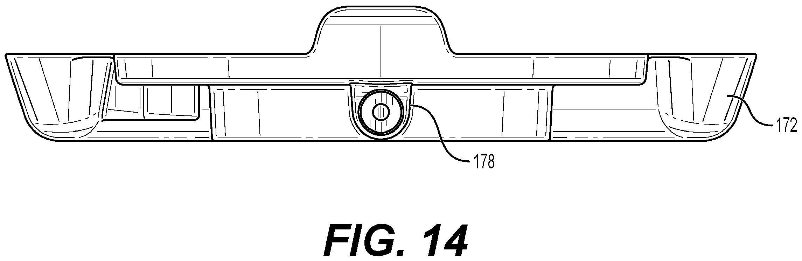

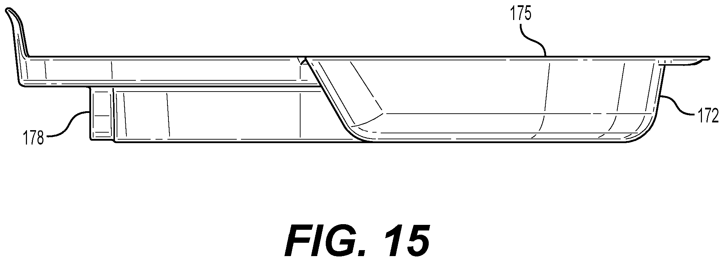

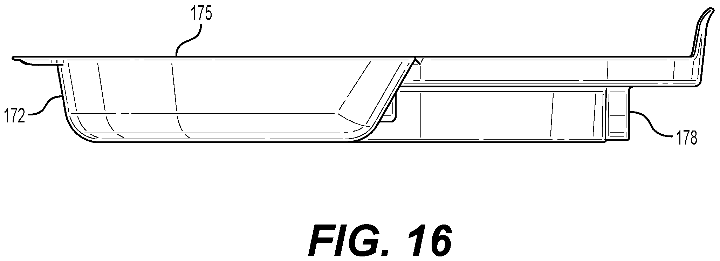

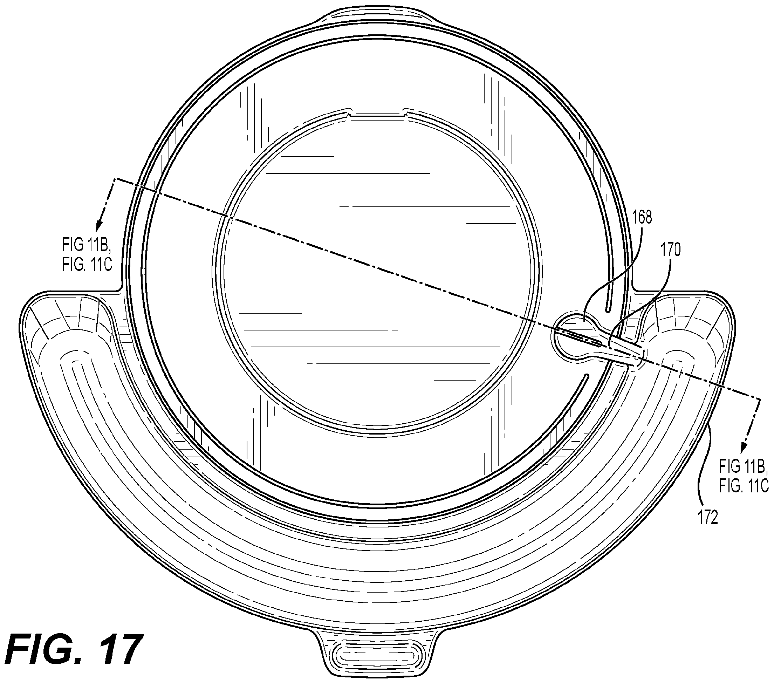

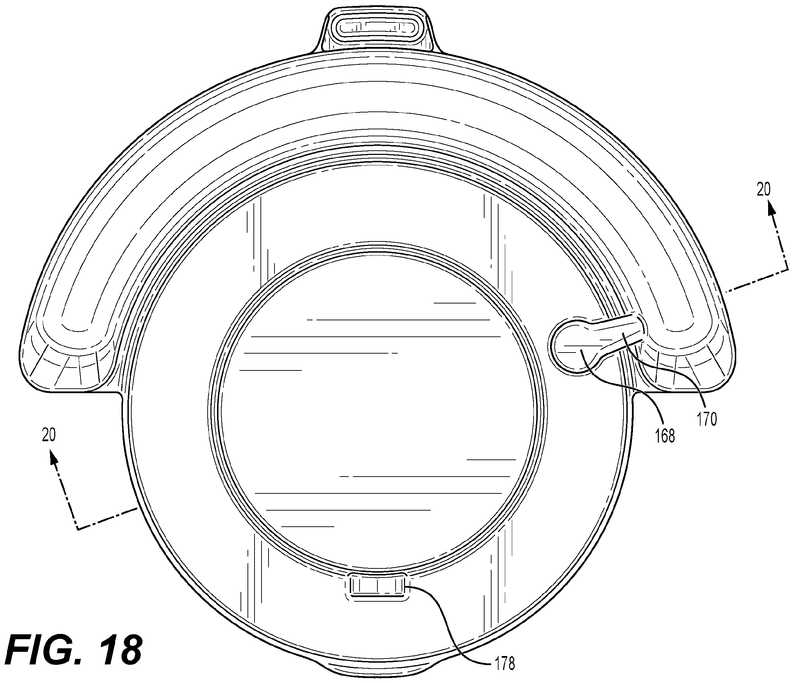

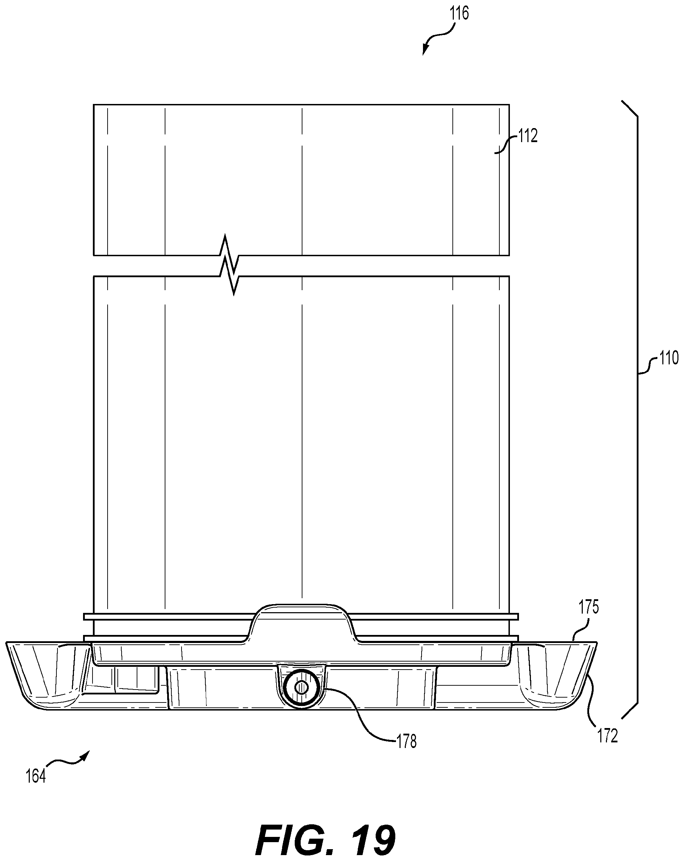

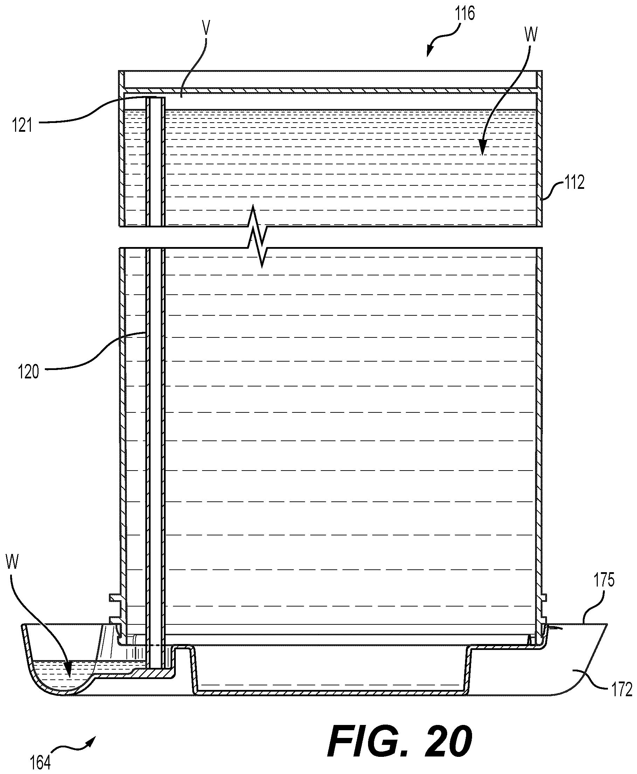

FIGs. 11-20 depict another embodiment of the disclosure, in which an apparatus 110 may include a bottom tray 164 defining a single passageway 170 to fluidly communicate the liquids within housing 112 with a trough 172. Having the passageway 170 for dispensing liquids to the trough 172 may allow the corresponding apparatus 110 to have reduced points of failure, thereby reliably regulating dispensation of liquids from the corresponding housing 112. A vent pipe socket 168 is used to receive lower end 123 of a corresponding vent tube 120, the functionalities of which correspond to those of the socket 36, the lower end 23, and the vent tube 20, respectively. The passageway 170 may have a contour similar to that of a keyhole to accommodate the vent pipe socket 168 therein, as shown in FIG. 12 and cross-sectional representation of the bottom tray 164 in FIGs. 11B and 11C, along line indicated in FIGs. 17 and 18. The passageway 170 may be defined at any location with respect to trough 172, such as at or near an end of the trough 172. The passageway 170 may be defined to be from about 1/8" to about 2" in width, and from about 1" to about 4" in depth. It has been found by experimentation, in certain embodiments, that passageway 170 having a width "W" of between 1/8" - 1" and depth "D" of 1 ¼" - 2" work suitably. The liquid inlet 178 may be employed to maintain a supply of liquid in the housing 112, similar to the liquid inlet 38. Similarly, an upper end wall 116, a lower end wall 118, a bottom edge 119, an open upper end 121, and an upper edge 175 in FIGs. 11 to 20 may correspond to the upper end wall 16, the lower end wall 18, the bottom edge 19, the upper end 21, and the trough edge 35 of FIGs. 1-10, respectively.

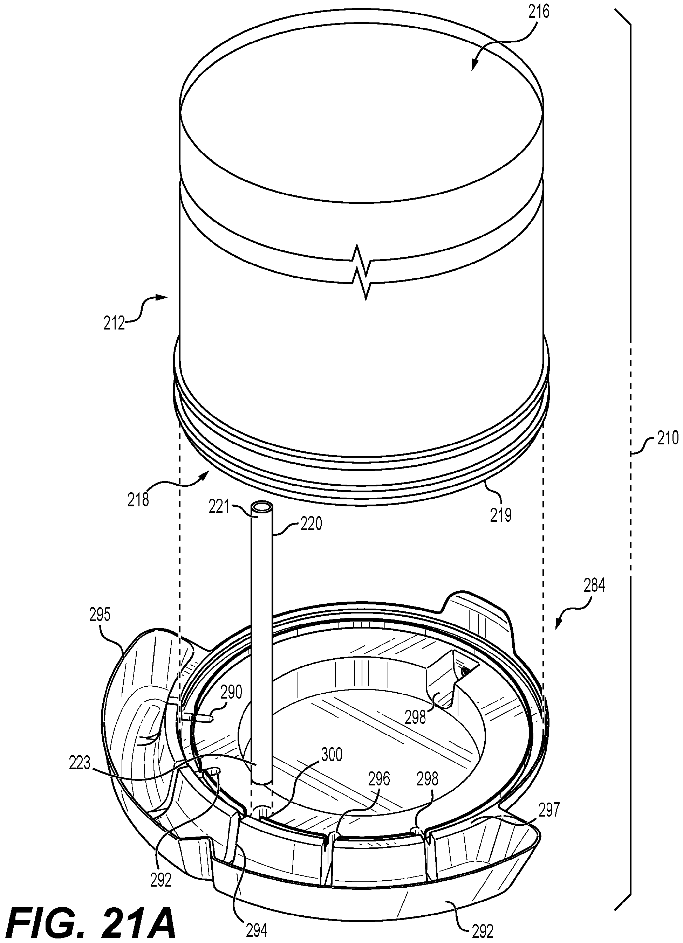

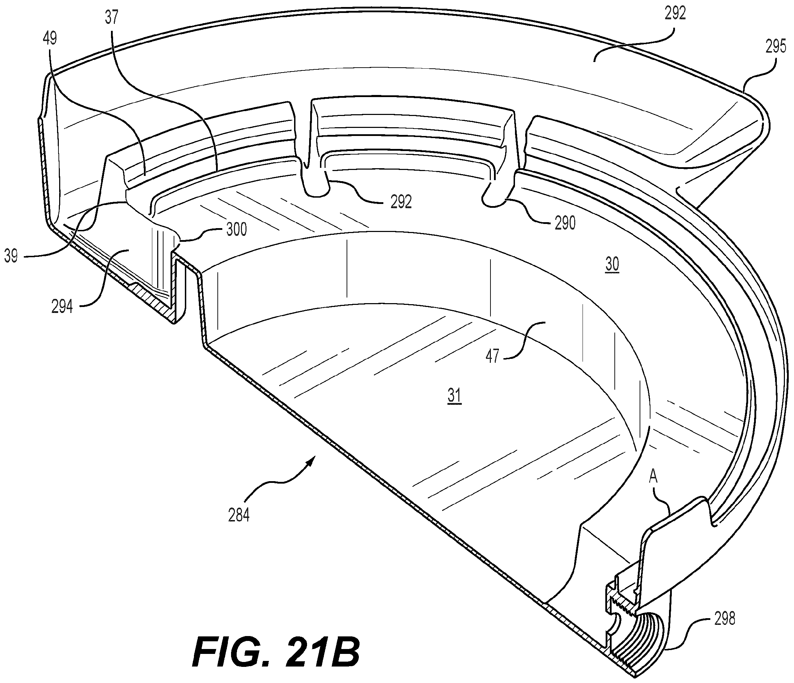

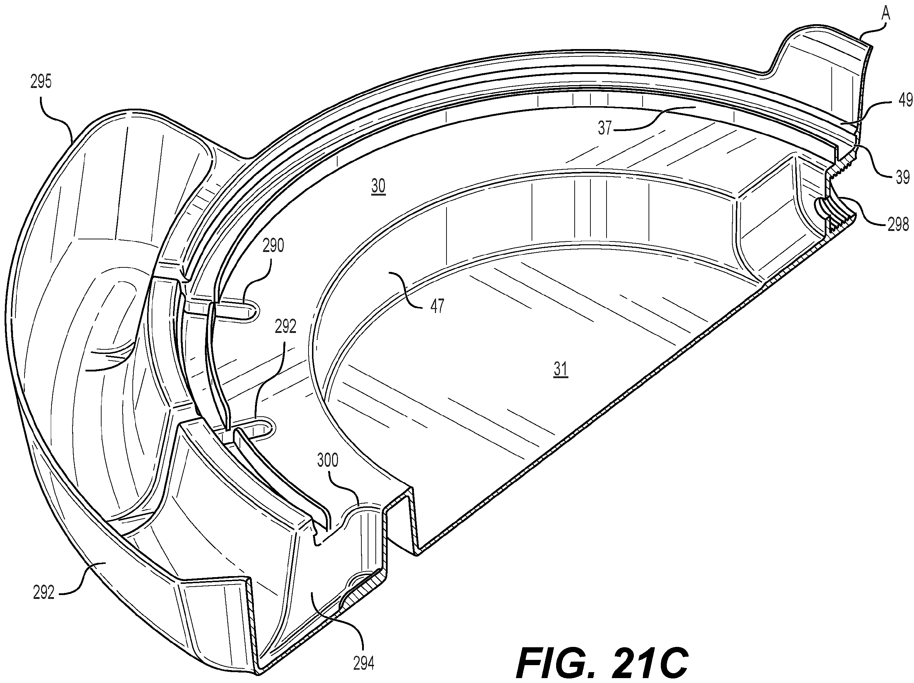

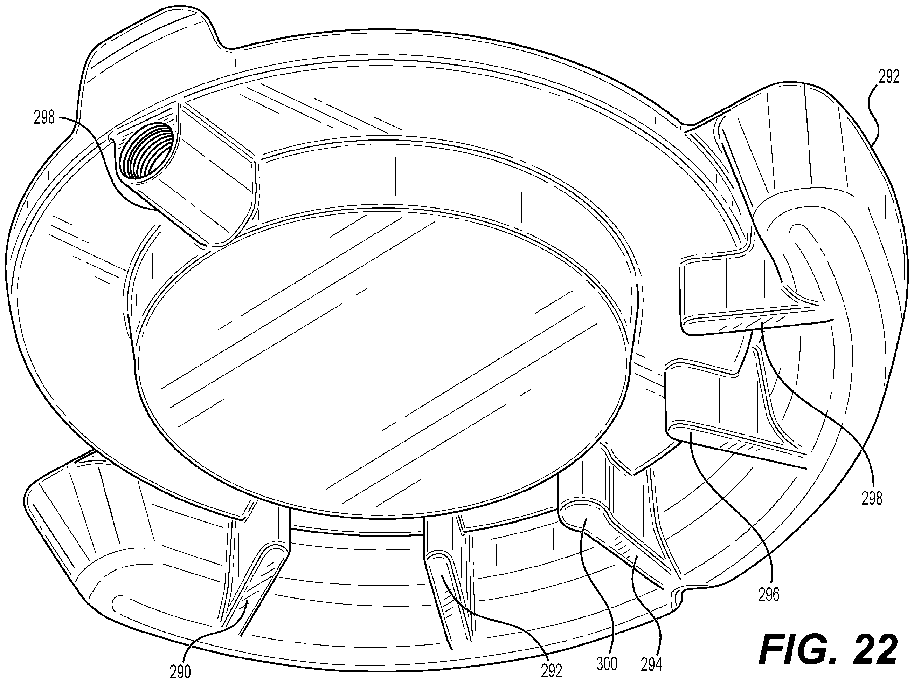

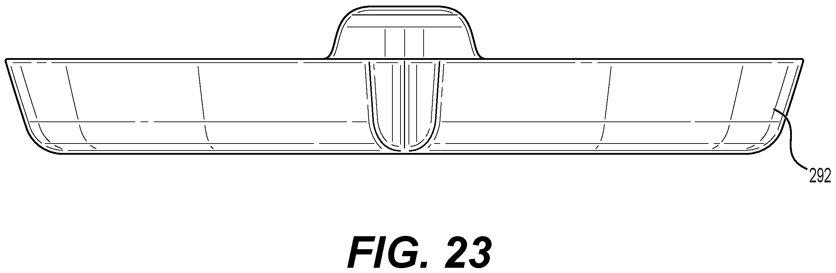

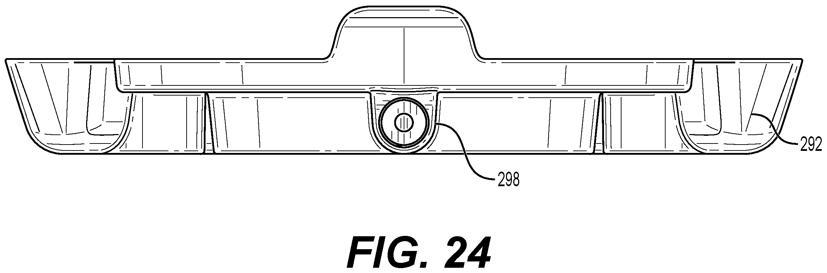

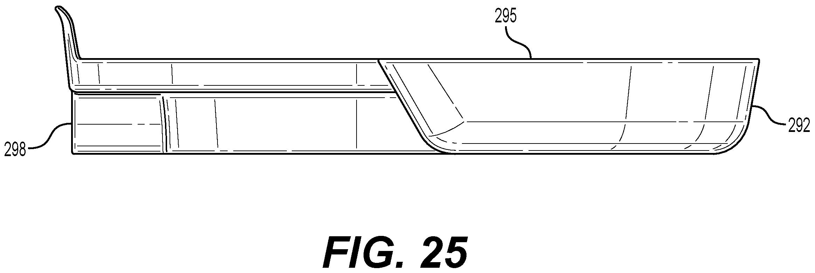

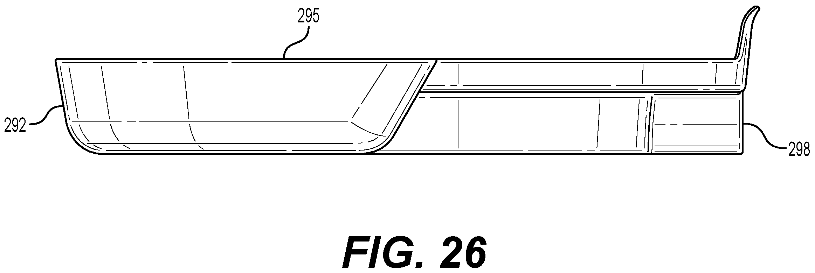

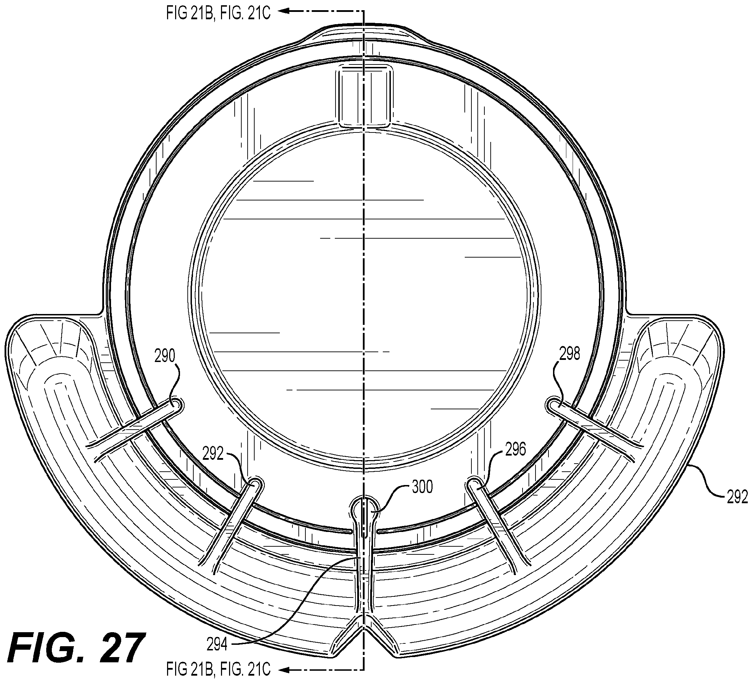

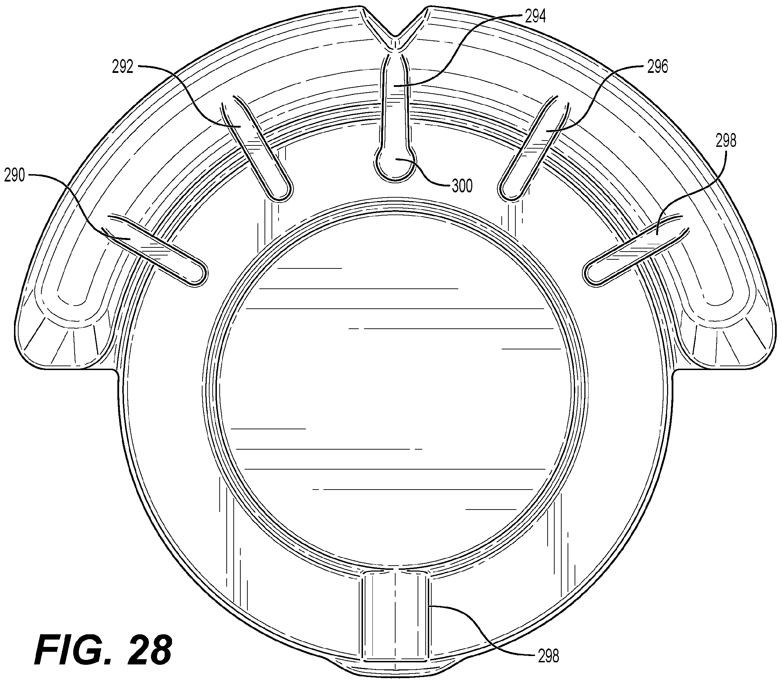

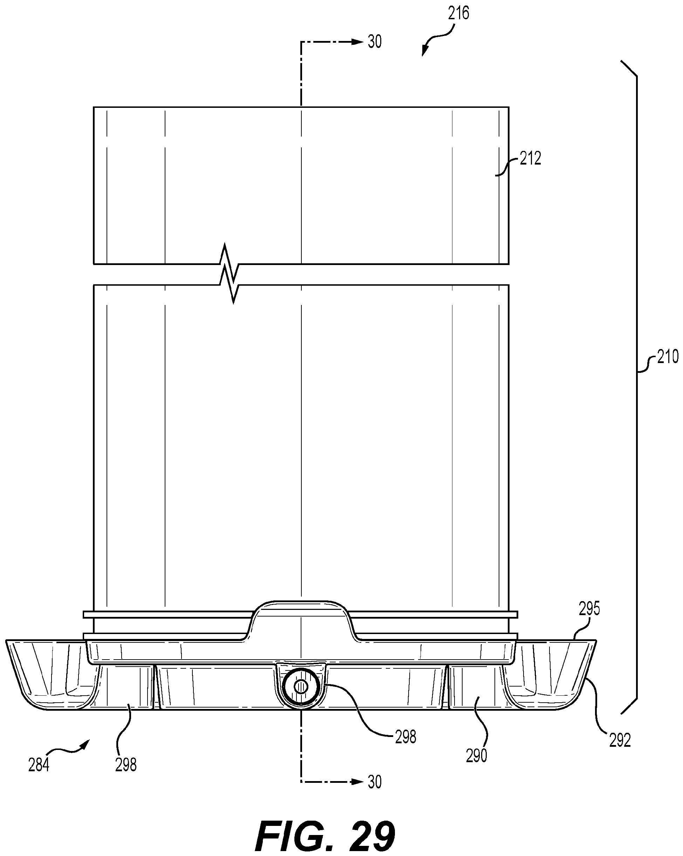

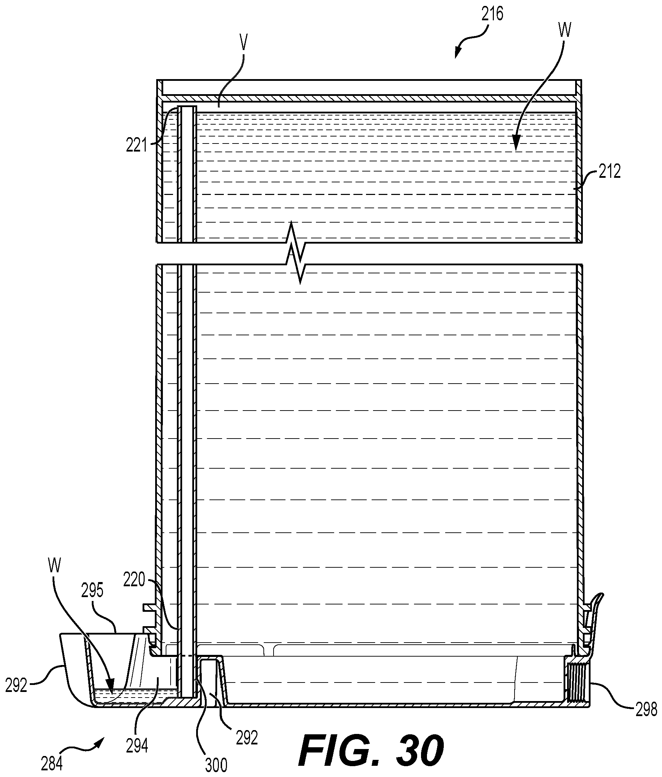

FIGs. 21-30 depict another embodiment of the disclosure, in which an apparatus 210 may include a bottom tray 284 defining one or more passageways 290, 292, 294, 296, and 298 in a housing 212. Having multiple passageways 290, 292, 294, 296, and 298 may allow the corresponding apparatus 210 to have increased control over the rate of dispensation of liquids from the corresponding housing 212 to a trough 292. The trough 292 may have at least one portion of the trough has a concaving contour. The passageways 290, 292, 296, and 298 may be defined with a substantially linear contour on a wall 297, the functionality of which corresponds to that of the wall 17. In embodiments as shown in FIGs. 21-30, the apparatus 10 may have 5 passageways. The passageways 290, 292, 294, 296, and 298 are defined radially on the bottom tray 284. The at least one portion, such as passageway 294, may be defined in proximity to the at least one of the passageways such that obstructions are prevented from blocking said passageway. A socket 300 is defined in association with one of the passageways, such as passageway 294, to receive a lower end 223 of a vent pipe 220, the functionalities of which correspond to that of the socket 36, the lower end 23, and the vent tube 20, respectively. The vent apparatus may fluidly communicate the ambient air into the volume of air based on level of the liquids on the at least one portion of the trough 292. The liquid inlet 298 may be employed to maintain a supply of liquid into the housing 212, similar to the liquid inlet 38. Similarly, an upper end wall 216, a lower end wall 218, a bottom edge 219, an open upper end 221, and an overflow upper edge 295 of FIGs. 21 to 30 may correspond to the upper end wall 16, the lower end wall 18, the bottom edge 19, the upper end 21, and the trough overflow edge 35 of FIGs 1-10, respectively.

In some embodiments, the apparatus 10, 110, or 210 may be placed on the floor or the ground to allow animals to drink liquids therefrom. In other embodiments, the apparatus 10, 110, or 210 may be suspended from a support structure such as trees, buildings, fences, table, stool, walls, and the like, at a conveniently accessible location for the animals. The animals may include, but not be limited to, chickens, turkeys, ducks, geese, quail, horses, cattle, sheep, goats, pigs, dogs, cats, and the like. The contours and dimensions of the apparatus 10, 110, or 210 may be suitably adapted for the particular animal for which it is intended. Animals may consume liquids, such as drinking water, from the trough 32. As levels of liquids in the trough 32 drop, the vent apparatus may equalize the negative pressure created in the chamber of the housing 12, thereby allowing said housing 12 to further dispense liquids into the trough 32 until an equilibrium between the pressure in chamber and the force of gravity is reached. Hence, the apparatus 10, 110, or 210 provides for self-regulated dispensation of liquids into the trough 32 with non-moving parts.

Therefore, the animal drink dispenser apparatus of the present disclosure dispenses liquids to a trough in a self-regulated manner. The drink dispenser apparatus controllably dispenses liquids with non-moving parts, thereby being easy to assemble or dissemble and energy efficient. The drink dispenser apparatus also dispenses liquids in regulated quantities such that minimal amounts of liquids remain stagnant in the trough, thereby reducing the risk of contamination. A non-limiting list of advantages of the drink dispenser apparatus include affordability, simple construction and configuration, portability and modularity, and improved sanitation through regulated dispensation of liquids, enabling flow of water therethrough with no use of moving parts, and minimal maintenance requirements.

Benefits, other advantages, and solutions to problems have been described above with regard to specific embodiments of the present invention. However, the benefits, advantages, solutions to problems, and any element(s) that may cause or result in such benefits, advantages, or solutions to become more pronounced are not to be construed as a critical, required, or essential feature or element of any or all the claims. The invention is defined solely by the appended claims including any amendments made during the pendency of this application and all equivalents of those claims as issued. While the invention has been described in its preferred form or embodiment with some degree of particularity, it is understood that this description has been given only by way of example and that numerous changes in the details of construction, fabrication, and use, including the combination of structural arrangement and sizes of features, may be made without departing from the spirit and scope of the invention.

## Claims

1. An animal drink dispenser apparatus, comprising:
a housing defining an interior volume adapted to store a supply of liquid;
a bottom tray releasably attachable to a bottom of the housing defining a trough;
at least one passageway, defined by the bottom tray, fluidly communicating the interior volume of the housing with the trough by force of gravity; and
a vent apparatus positioned within the interior volume adapted to equalize a pressure in a volume of air above the liquid in the housing, which pressure is reduced when said liquid is dispensed to the trough, with the ambient air.

2. The animal drink dispenser apparatus of claim 1, wherein the vent apparatus comprises a one-way vent valve adapted to fluidly communicate the volume of air above the liquid with the ambient air.

3. The animal drink dispenser apparatus of claim 1, wherein the vent apparatus comprises a vent tube having an open upper end disposed inside the housing and an open lower end reversibly submerged into the liquid dispensed through the at least one passageway to the trough such that the vent tube fluidly communicates the ambient air to the volume of air in the housing to equalize pressure therebetween when the liquid in the trough is consumed, whereby a level of the liquid in the trough drops and causes the open lower end of said vent tube to reemerge from said liquid.

4. The animal drink dispenser apparatus of claim 3, wherein the open lower end is adapted to seat within a socket defined by a sidewall of the bottom tray, the socket being substantially concentric with at least a portion of the at least one passageway and/or
wherein the lower end is adjustably positioned at a desired distance from the bottom of the trough to maintain a desired volume of the liquid dispensed to said trough.

5. The animal drink dispenser apparatus of claim 1, further comprising a wall defined by at least a portion of the bottom tray, the at least one passageway being defined by said wall.

6. The animal drink dispenser apparatus of claim 5, wherein the vent apparatus is a hollow tube connected to the wall.

7. The animal drink dispenser apparatus of claim 1, wherein the bottom tray further defines a liquid inlet for refilling the housing.

8. The animal drink dispenser apparatus of claim 7, wherein the vent apparatus allows the volume of air in the housing to be pushed out therethrough to the ambient air when said housing is being refilled through the liquid inlet such that the volume of air is prevented from pressurizing; and/or
wherein the liquid inlet is internally threaded to securely engage with at least one liquid supply source having a corresponding threaded portion.

9. The animal drink dispenser apparatus of claim 1, wherein the bottom tray is releasably sealed to the bottom of the housing; and/or
wherein the bottom tray further defines an inner ridge and an outer ridge concentrically and opposingly configured to the other, the bottom tray being sealed to the bottom of the housing by fitting a bottom edge of the housing between the inner ridge and the outer ridge.

10. The animal drink dispenser apparatus of claim 9, wherein the outer ridge defines one or more tabs extending therefrom that permit the flexing of the inner ridge and an outer ridge to create interlocking engagement with a corresponding lip that extends from the bottom of the housing.

11. The animal drink dispenser apparatus of claim 1, wherein the at least one passageway comprises a passageway defined by the bottom tray; and/or
wherein the at least one passageway comprises more than one passageway defined radially on the bottom tray to allow the liquid in the housing to be dispensed therethrough to the trough.

12. The animal drink dispenser apparatus of claim 1, wherein each of the at least one passageway is defined to be from about 1/16" to about 2" in width, and about 1" to about 4" in depth; and/or
wherein the housing is interconnected with one or more other housings.

13. An animal drink dispenser apparatus, comprising:
a housing defining an interior volume adapted to store a supply of liquid;
a bottom tray releasably attachable to a bottom of the housing defining a trough;
a passageway, defined by the bottom tray, fluidly communicating the interior volume of the housing with the trough by force of gravity, said passageway being positioned in proximity to an end of the trough; and
a vent apparatus adapted to equalize a pressure in a volume of air above the liquid in the housing, which is reduced when said liquid is dispensed into the trough, with the ambient air.

14. An animal drink dispenser apparatus, comprising:
a housing defining an interior volume adapted to store a supply of liquids;
a bottom tray releasably attachable to a bottom of the housing defining a trough, wherein at least one portion of the trough has a concaving contour;
one or more passageways, defined by the bottom tray, fluidly communicating the interior volume of the housing with the trough by force of gravity; and
a vent apparatus, positioned within the interior volume, the vent apparatus adapted to equalize a pressure in a volume of air above the liquid in the housing, which is reduced when said liquid is dispensed into the trough, with the ambient air, wherein the vent apparatus is seated with respect to the passageway in proximity to the at least one portion such that the vent apparatus fluidly communicates the ambient air into the volume of air based on a level of the liquid in the at least one portion of the trough.

15. The animal drinker apparatus of claim 14, wherein the at least one portion is defined in proximity to the at least one of the passageways such that obstructions are prevented from blocking said passageway.
